**Europäisches Patentamt**

**European Patent Office**

**Office européen des brevets**

(19)

(11) Numéro de publication: **0 014 636
B1**

(12) **FASCICULE DE BREVET EUROPEEN**

(45) Date de publication du fascicule de brevet: **23.09.81**

(51) Int. Cl.³: **H 02 K 44/06, B 22 D 11/12**

(21) Numéro de dépôt: **80400141.0**

(22) Date de dépôt: **29.01.80**

(54) Inducteur électromagnétique destiné à produire un champ hélicoïdal.

(30) Priorité: **30.01.79 FR 7902274**

(43) Date de publication de la demande:
**20.08.80 Bulletin 80/17**

(45) Mention de la délivrance du brevet:
**23.09.81 Bulletin 81/38**

(84) Etats Contractants Désignés:
**AT BE CH DE GB IT LU NL SE**

(56) Documents cités:
**EP - A - 0 005 676
DE - A - 2 451 718
DE - A - 2 516 471
FR - A - 851 773
FR - A - 2 041 128
FR - A - 2 154 852**

(73) Titulaire: **C E M COMPAGNIE ELECTRO
MECANIQUE Société Anonyme
12, rue Portalis
F-75008 Paris (FR)**

(72) Inventeur: **Delassus, Jean
31 rue Carrière
F-95150 Montmorency (FR)**

(74) Mandataire: **Roger-Petit, Jean-Camille et al,
OFFICE BLETRY 2, Boulevard de Strasbourg
F-75010 Paris (FR)**

Courier Press, Leamington Spa, England.

### Inducteur électromagnétique destiné à produire un champ hélicoïdal

L'invention est relative à un inducteur électromagnétique destiné à créer un champ magnétique à mouvement hélicoïdal dans un volume cylindrique par la superposition d'un flux tournant et d'un flux glissant axialement, et comprenant un premier circuit magnétique pour la fermeture du flux tournant, constitué par un empilage de couronnes magnétiques minces isolées les unes des autres, serrées entre des plaques annulaires d'extrémité et découpées du côté interne pour former de larges dents régulièrement espacées dans le sens périphérique et séparées par des encoches, un premier bobinage inducteur polyphasé dont les bobines sont disposées dans les encoches pour créer le flux tournant, un deuxième circuit magnétique pour la fermeture du flux glissant, constitué par des barreaux parallèles à l'axe et feuilletés dans des plans sensiblement diamétraux, et un deuxième bobinage inducteur polyphasé constitué par des bobines circulaires espacées axialement et coaxiales au premier circuit magnétique, où les phases se succèdent axialement pour créer le flux glissant.

L'utilisation d'un champ à mouvement hélicoïdal pour le brassage de billette dans une installation de coulée continue a fait l'objet de la demande de brevet français n° 78 15304 du 23 mai 1978 au nom de la Demanderesse qui correspond à la demande de brevet européen EP-A-0 005 676 (qui fait partie de l'état de la technique au sens de Article 54 (3)). Il est décrit dans ce brevet deux types possibles d'inducteurs dans lesquels un premier jeu de bobines disposées dans les encoches du circuit magnétique de l'inducteur d'un moteur à champ tournant crée un champ tournant et un deuxième jeu de bobines circulaires régulièrement espacées axialement, crée un champ glissant, des culasses constituées par des barreaux parallèles à l'axe et régulièrement espacés dans le sens circonférentiel permettant la fermeture du flux créé par le deuxième jeu de bobines.

On constate que dans les deux types d'inducteurs décrits dans la demande de brevet français susmentionnée, le montage des bobinages et des éléments des circuits magnétiques est difficile car les bobines et les éléments des circuits magnétiques sont imbriqués les uns dans les autres.

En outre, dans un inducteur où coexistent des bobines polaires polyphasées disposées à la périphérie d'un circuit magnétique de moteur à champ tournant et des bobines circulaires coaxiales entourées de culasses magnétiques en forme de barreaux droits disposés autour de ces bobines circulaires, il se pose aussi un problème. En effet, un tel inducteur doit être étudié de façon que la combinaison des flux créés par les deux systèmes permet à chacun des flux de se fermer sans réaction mutuelle entre les bobines d'un système et les culasses de l'autre système, de façon à éviter la création de pertes électriques parasites et à obtenir, grâce à un découplage parfait des circuits magnétiques l'indépendance des réglages des deux modes d'action sur la charge secondaire.

L'invention a pour but de fournir un inducteur électromagnétique de brassage dont les divers éléments peuvent être assemblés facilement et de manière précise et qui permet de résoudre le problème susindiqué en utilisant un circuit magnétique doublement feuilleté assurant un guidage des flux sans enlacement réciproque des bobines d'un système par les flux de l'autre système.

A cet effet, l'inducteur selon l'invention est caractérisé en ce que certaines dents consécutives du premier circuit magnétique sont partiellement évidées pour créer des rainures axiales, en ce que les barreaux du deuxième circuit magnétique sont encastrés dans lesdites rainures et séparés du premier circuit magnétique par des isolants, et en ce que les bobines créant le flux glissant sont cylindriques et disposées à l'intérieur du volume cylindrique limité par les dents du premier circuit magnétique.

Le barreaux feuilletés constituant le deuxième circuit magnétique sont avantageusement constitués de tôles minces collées entre elles et verrouillées mécaniquement par des encochages ménagés dans les plaques d'extrémité.

L'invention sera mieux comprise à l'aide des dessins annexés qui se rapportent en particulier à un inducteur de brassage électromagnétique pour coulée continue des billettes.

La figure 1 est une coupe transversale d'un inducteur selon l'invention comportant un circuit magnétique à six dents et six encoches.

La figure 2 est une couple transversale d'un inducteur selon l'invention comportant un circuit magnétique à 8 dents et 8 encoches.

La figure 3 est une coupe axiale suivant la ligne AA de la figure 2.

La figure 4 est analogue à la figure 1, mais avec des barreaux feuilletés occupant seulement trois dents consécutives.

La figure 5 est analogue à la figure 2 mais avec des barreaux feuilletés occupant seulement quatre dents consécutives.

La figure 6 est une coupe axiale suivant la ligne BB des figures 4 ou 5.

Sur les figures, on a désigné par 1 le premier circuit magnétique destiné à canaliser le flux tournant créé par le premier bobinage inducteur polyphasé 7. Le premier circuit magnétique 1 est constitué par un empilage de couronnes magnétiques 12 minces isolées les unes des autres, de préférence collées entre elles et découpées de manière à former des encoches 2 et des dents 3. Comme décrit dans la demande de brevet français n° 2 355 392, afin d'obtenir un flux traversant diamétralement le volume cylindrique intérieur 13 où se trouve la billette 15 en cours de refroidissement, il est avantageux que le premier bobinage inducteur polyphasé 7 soit constitué par un nombre pair de bobines polaires entourant chacune une dent 3 et que les bobines polaires situées autour de deux dents diamétralement opposées appartiennent à la même phase et soient couplées de telle façon que les flux engendrés soient additifs.

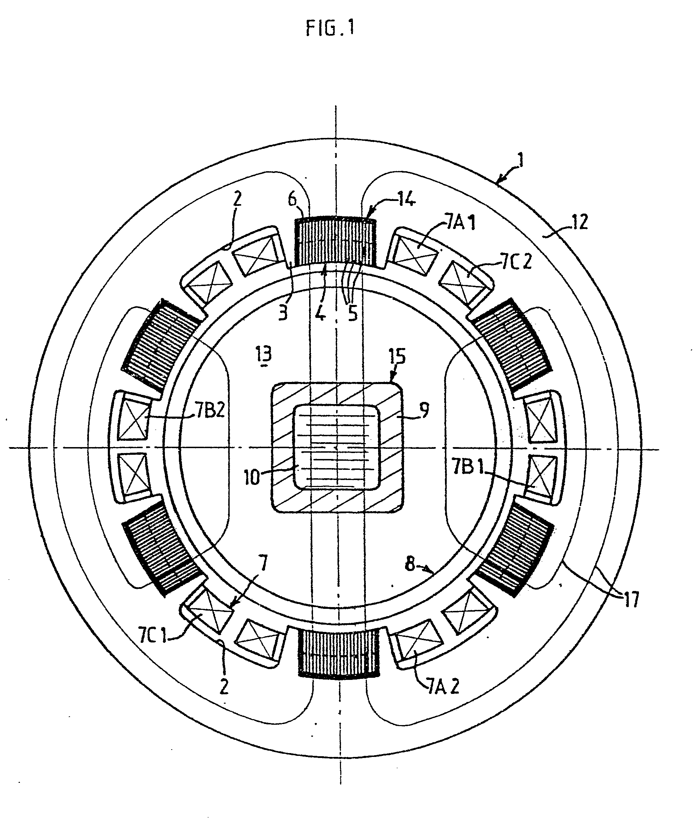

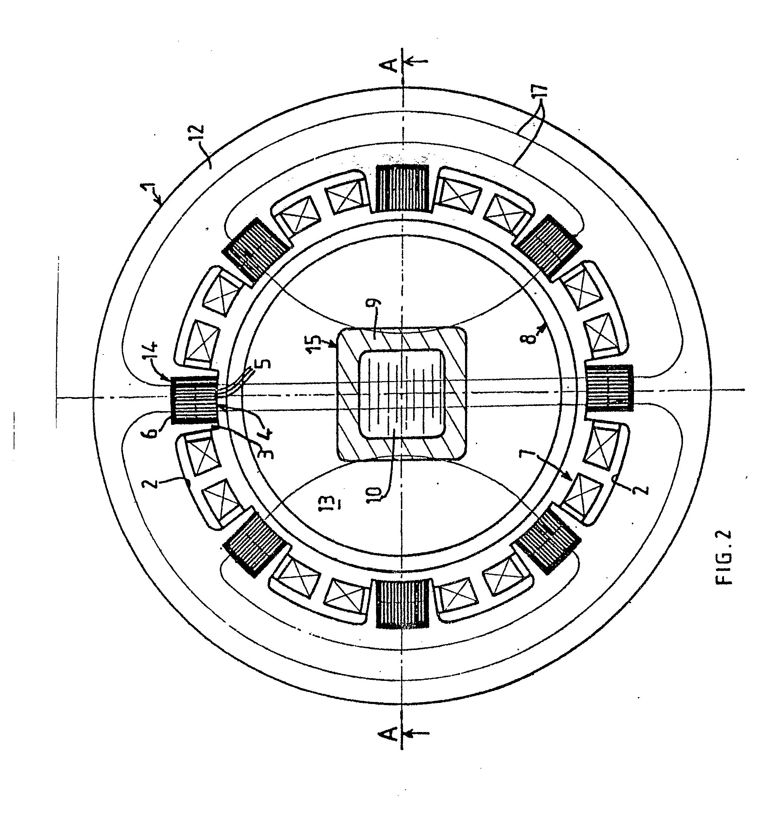

Comme représenté sur les figures 1 et 2, chaque dent 3 présente une profonde rainure 14 dans laquelle est encastré un des barreaux 4 du deuxième circuit magnétique servant de retour au flux glissant créé par le deuxième bobinage inducteur polyphasé 8 qui est formé par une succession axiale de bobines cylindriques. Les barreaux 4 sont constitués par des tôles magnétiques minces 5 et sont feuilletés dans des plans sensiblement diamétraux de façon à pouvoir laisser pénétrer le flux en forme de boucles se déplaçant axialement créé par le deuxième bobinage 8 dont les bobines cylindriques successives sont reliées respectivement aux phases successives d'une source d'alimentation polyphasée non montrée.

Les tôles magnétiques minces 5 des barreaux 4 sont de préférence isolées les unes des autres et collées entre elles, et les barreaux 4 sont isloés par rapport au fond et aux côtés des rainures 14 par des feuilles isolantes 6.

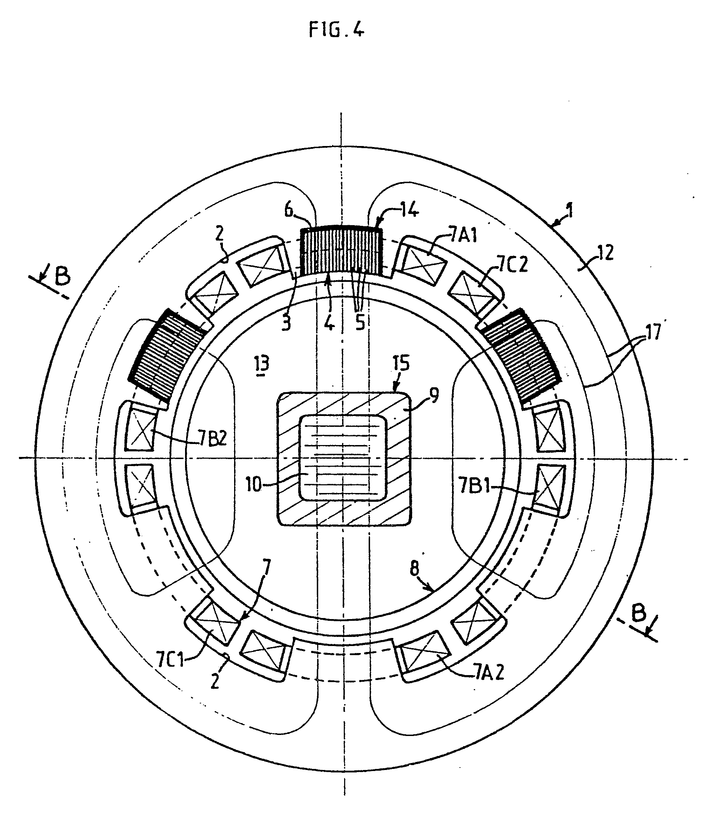

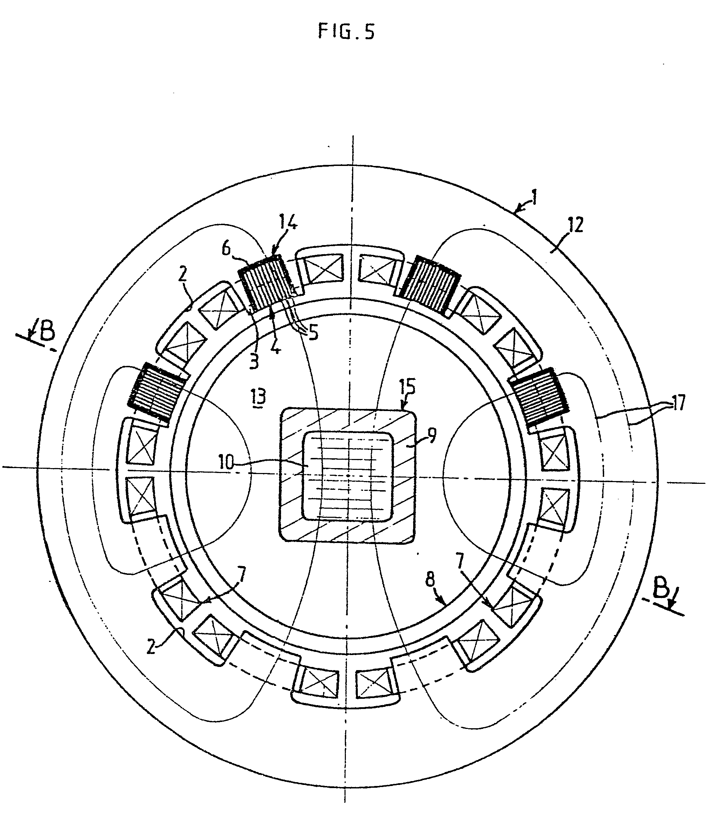

Sur les figures 4 et 5, seules trois dents 3 (figure 4) ou quatre dents 3 (figure 5) consécutives présentant une rainure 14 logeant un barreau feuilleté 4, les autres dents ne présentant pas de rainure et ne contenant pas de barreau feuilleté.

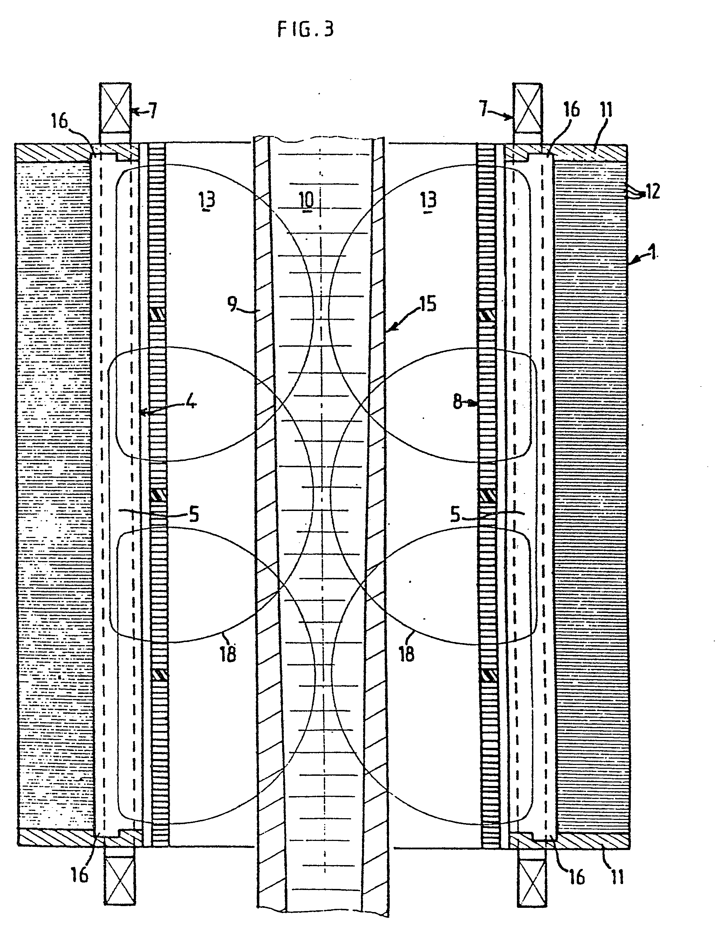

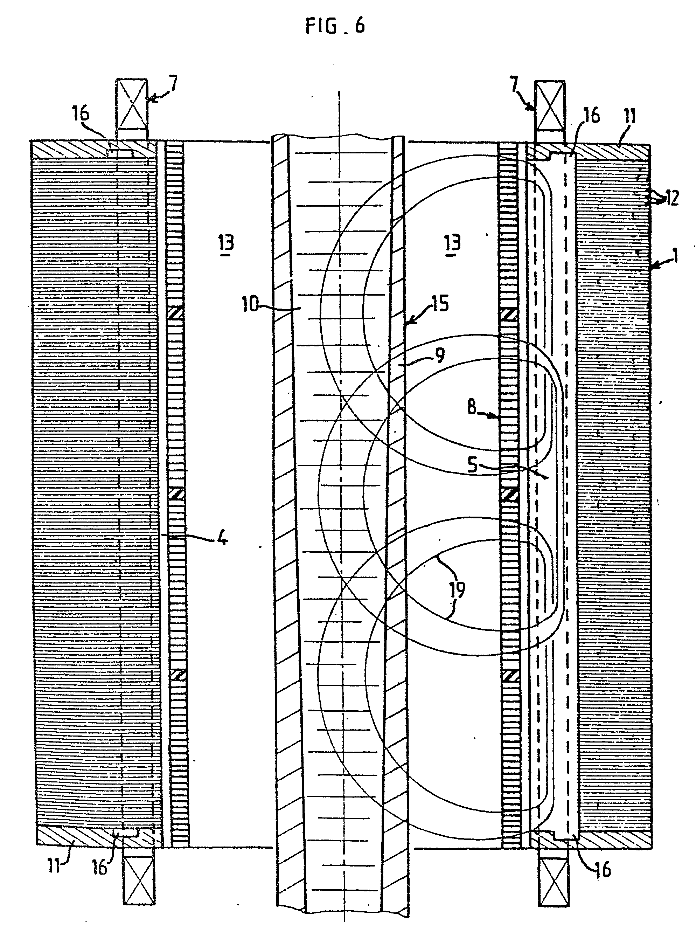

Des plaques annulaires d'extémité 11 (figures 3 et 6) permettent d'une part de serrer axialement l'empilage des couronnes magnétiques 12 du circuit magnétique 1 et d'autre part de maintenir les extrémités des barreaux 4 grâce à des encoches coopérant avec des talons 16 prévus aux extrémités des barreaux 4.

On a également représenté sur les figures la billette 15 en cours de refroidissement avec sa croûte 9 déjà solidifiée et son coeur 10 encore liquide, dont le brassage est réalisé au moyen de l'inducteur ci-dessus décrit.

La configuration des champs magnétiques est schématisée par les boucles de flux représentées sur les différentes figures. Les lignes 17 schématisent les boucles du champ tournant dans des plans perpendiculaires à l'axe de la billette 15. Les lignes 18 et 19 schématisent les boucles de champ glissant dans des plans verticaux passant par l'axe de la billette 15. Les lignes 18 correspondent à un inducteur dont toutes les dents 3 sont pourvues de barreaux 4 (figures 1 à 3). Les lignes 19 correspondent à un inducteur dont une seule moitié des dents 3 est équipée de barreaux 4 (figures 4 à 6). Le fonctionnement de l'inducteur selon l'invention est le suivant: lorsque les bobines polaires du bobinage inducteur 7 sont excitées par des courant polyphasés, le flux du champ tournant sort radialement par les dents feuilletées en transitant facilement du feuilletage horizontal du circuit magnétique 1 au feuilletage vertical des barreaux 4. Le flux du champ tournant traverse diamétralement le volume cylindrique intérieur 13 si les bobines polaires diamétralement opposées sont couplées à flux additif, et il traverse facilement les bobines cylindriques du bobinage inducteur 8, dont les spires forment un feuilletage horizontal relativement perméable, pour venir brasser en rotation le coeur liquide 10 de la billette 15 en cours de coulée continue.

L'amortissement du champ tournant à la traversée des bobines cylindriques peut être rendu très faible, en adoptant comme fil conducteur pour les bobines cylindriques un fil méplat de faible épaisseur enroulé sur chant de manière à former un enroulement hélicoïdal.

Lorsque le bobinage inducteur 8, composé de plusieurs phases, est excité par des courants polyphasés, son flux dessine des boucles verticales qui drainent l'espace intérieur et tendent à se fermer à l'extérieur du bobinage 8 par les barreaux 4 qui jouent le rôle de shunts magnétiques et qui captent le flux externe en l'empêchant d'induire des courants circulaires dans les couronnes magnétiques 12 du circuit magnétique 1.

Les boucles de flux du bobinage inducteur 8 ne peuvent donc pas enlacer les bobines polaires de bobinage inducteur 7 et créer avec elles un couplage magnétique.

D'autre part, les boucles de flux du bobinage inducteur 8 engendrent un effort moteur axial sur les couches liquides externes du coeur 10 de la billette 15 en cours de coulée continue, ce qui crée au sein du métal liquide un mouvement de convection vertical. Dans le cas des figures 1 à 3, le mouvement de convection vertical est créé sur toute la périphérie et le retour du métal liquide s'effectue dans la partie centrale suivant l'axe de la billette 15. Dans le cas des figures 4, 5, 6, le mouvement de convection vertical crée par le bobinage inducteur 8 sur le métal liquide est créé par un champ glissant beaucoup plus intense sur la demi-circonférence munie de barreaux 4, que sur la demi-circonférence opposée dépourvue de barreaux 4. En conséquence, le courant de convection du métal liquide se fait verticalement dans le sens du champ glissant du côté de la demi-circonférence munie de barreaux verticaux 4, tandis que le courant de retour se fait verticalement du côté de l'autre demi-circonférence où le champ glissant est atténué parce qu'il ne peut se fermer par suite de l'absence de barreaux.

Lorsque les deux champs sont appliqués simultanément, on obtient dans la billette 15 une superposition des effets précédents, c'est-à-dire un mouvement de convection hélicoïdal, alors que, dans l'inducteur, chaque flux s'écoule dans son circuit magnétique respectif avec un bon rendement.

Les figures 1 et 4 représentent le cas où le bobinage inducteur 7 créant le flux tournant comporte six bobines polaires montées respectivement sur six dents 3. Les bobines 7A1 et 7A2, 7B1 et 7B2, 7C1 et 7C2 sont reliées électriquement par paire respectivement aux phases U, V, W d'une source de courant alternatif triphasé non montrée et sont couplées deux à deux de façon que les flux créés sur deux dents diamétralement opposées occupées par des bobines appartenant à la même phase s'ajoutent.

Le bobinage inducteur 8 créant le flux glissant peut être alimenté en courant alternatif triphasé, diphasé ou polyphasé. Il peut être aussi avantageux d'alimenter à des fréquences différentes le bobinage inducteur 7 créant le flux tournant et le bobinage inducteur 8 créant le flux glissant.

Les figures 2 et 5 correspondent à un circuit magnétique 1 dont le bobinage inducteur 7 comporte huit bobines polaires alimentées en courant alternatif tétraphasé. Les mêmes remarques que ci-dessus s'appliquent, tant pour la phase et le couplage des bobines disposées autour de deux dents diamétralement opposées, que pour le nombre de phases du courant alternatif d'alimentation des bobines créant le flux glissant et pour les fréquences d'alimentation des deux bobinages 7 et 8.

L'inducteur selon l'invention peut être placé de façon connue dans une lingotière pour exercer un brassage dans la zone de solidification de la croûte de la billette, et il peut être refroidi par une forte circulation d'eau. Il peut aussi être disposé après la lingotière dans la zone de refroidissement secondaire, à l'extérieur d'une enveloppe toroïdale qui est parcourue également par une forte circulation d'eau et dont la paroi faisant face à la billette est de façon connue de préférence en métal amagnétique.

**Revendications**

1. Inducteur électromagnétique destiné à créer un champ magnétique à mouvement hélicoïdal dans un volume cylindrique (13) par la superposition d'un flux tournant (17) et d'un flux (18, 19) glissant axialement et comprenant un premier circuit magnétique (1) pour la fermeture du flux tournant (17), constitué par un empilage de couronnes magnétiques minces (12) isolées les unes des autres, serrées entre des plaques annulaires d'extrémité (11) et découpées du côté interne pour former de larges dents (3) régulièrement espacées dans le sens périphérique et séparées par des encoches (2), un premier bobinage inducteur polyphasé (7) dont les bobines (7A1, 7A2, 7B1, 7B2, 7C1, 7C2) sont disposées dans les encoches (2) pour créer le flux tournant (17), un deuxième circuit magnétique pour la fermeture du flux glissant (18, 19), constitué par des barreaux (4) parallèles à l'axe et feuilletés dans des plans sensiblement diamétraux, et un deuxième bobinage inducteur polyphasé (8) constitué par des bobines circulaires espacées axialement coaxiales au premier circuit magnétique (1), où les phases se succèdent axialement pour créer le flux glissant, caractérisé en ce que certaines dents consécutives (3) du premier circuit magnétique sont partiellement évidées pour créer des rainures axiales (14), en ce que les barreaux (4) du deuxième circuit magnétique sont encastrés dans lesdites rainures (14) et séparés du premier circuit magnétique par des isolants (6), et en ce que les bobines (8) créant le flux glissant (18, 19) sont cylindriques et disposées à l'intérieur du volume cylindrique (13) limité par les dents (3) du premier circuit magnétique (1).

2. Inducteur électromagnétique selon la revendication 1, caractérisé en ce que les barreaux (4) du deuxième circuit magnétique sont verrouillés mécaniquement par des encochages (16) ménagés dans les plaques d'extrémité (11).

3. Inducteur électromagnétique selon la revendication 1 ou 2, caractérisé en ce que chacune des bobines cylindriques (8) créant le flux glissant est constituée par une couche de fil méplat enroulé sur chant de manière à former un enroulement hélicoïdal.

4. Inducteur électromagnétique selon l'une quelconque des revendications 1 à 3, caractérisé en ce que toutes les dents (3) du premier circuit magnétique (1) sont munies de rainures (14) occupées par les barreaux (4) du deuxième circuit magnétique.

5. Inducteur électromagnétique selon l'une quelconque des revendications 1 à 4, caractérisé en ce que le premier bobinage inducteur polyphasé (7) est constitué de façon connue par un nombre pair de bobines polaires (7A1, 7A2, 7B1, 7B2, 7C1, 7C2) entourant chacune une dent respective (3) du premier circuit magnétique (1) et en ce que les bobines polaires montées sur deux dents (3) diamétralement opposées du premier circuit magnétique (1) sont couplées électriquement de façon connue de telle façon que les flux qu'elles créent s'additionnent.

**Patentansprüche**

1. Elektromagnetischer Induktor zum Erzeugen eines wendelförmigen magnetischen Wanderfeldes in einem zylindrischen Volumen (13) durch Überlagerung eines Drehflusses (17) und eines axial gleitenden Flusses (18, 19), welcher einen ersten Magnetkreis (1) für den Schluß des Drehflusses (17) aufweist, welcher aus einem Stapel von dünnen magnetischen Kränzen (12) besteht, die voneinander isoliert zwischen ringförmigen Endplatten (11) eingespannt sind und auf der Innenseite ausgestanzt sind, um breite Zähne (3) zu bilden, welche in Umfangrichtung gleichmäßigen Abstand haben und durch Einkerbungen (2) voneinander getrennt sind, eine erste Mehrphasen-Induktor-Wicklung (7), bei welcher die Spulen (7A1, 7A2, 7B1, 7B2, 7C1, 7C2) in den Einkerbungen (2) untergebracht sind, um den Drehfluß (17) zu erzeugen, einen zweiten Magnetkreis für den Schluß des Gleitflusses (18, 19), welcher aus parallelachsigen Stäben (4) besteht, die in genau diametralen Ebenen laminiert sind, und einen zweiten Mehrphasen-Induktor (8), der aus Ringspulen mit axialem Abstand besteht, die zum ersten Magnetkreis (1) koaxial sind, in denen die Phasen axial aufeinanderfolgen, um den Gleitfluß zu erzeugen, dadurch gekennzeichnet, daß verschiedene aufeinanderfolgende Zähne (3) des ersten Magnetkreises teilweise ausgenommen sind, um axiale Nuten (14) zu erzeugen, daß die Stäbe (4) des zweiten Magnetkreises in die Nuten (14) eingelassen und vom ersten Magnetkreis durch Isolatoren (6) getrennt sind, und daß die Spulen (8) zur Erzeugung des Gleitflusses (18, 19) zylindrisch sind und im inneren des zylindrischen Volumens angeordnet sind, welches durch die Zähne (3) des ersten Magnetkreises (1) begrenzt wird.

2. Induktor nach Anspruch 1, dadurch gekennzeichnet, daß die Stäbe (4) des zweiten Magnetkreises mechanisch in Einkerbungen (16) in den Endplatten (11) eingreifen.

3. Induktor nach Ansprüchen 1 oder 2, dadurch gekennzeichnet, daß jede der Zylinderspulen (8) zum Erzeugen des Gleitflusses aus einer Lage von Flachdraht besteht, der auf seiner Schmalseite so aufgerollt ist, daß er eine wendelförmige Wicklung bildet.

4. Induktor nach einem der Ansprüche 1 bis 3, dadurch gekennzeichnet, daß alle Zähne (3) des ersten Magnetkreises (1) mit Nuten versehen sind, die durch die Stäbe (4) des zweiten Magnetkreises besetzt sind.

5. Induktor nach einem der Ansprüche 1 bis 4, dadurch gekennzeichnet, daß die erste Mehrphasen-Induktor-Wicklung (7) in bekannter Weise durch eine gerade Anzahl von Polspulen (7A1, 7A2, 7B1, 7B2, 7C1, 7C2) gebildet wird, die je einen Zahn (3) des ersten Magnetkreises (1) umschließen, und daß jede der Polwicklungen, die auf diametral gegenüberstehenden Zähnen (3) des ersten Magnetkreises (1) befestigt sind, elektrisch so gekoppelt sind, daß die von Ihnen erzeugten Flüsse sich addieren.

**Claims**

1. Electromagnetic inductor intended to create a magnetic field having a helical movement in a cylindrical volume (13) by the superimposition of a rotating flux (17) and an axially sliding flux (18, 19) and comprising a first magnetic circuit (1) for closing the rotating flux (17), constituted by a stack of thin magnetic rings (12) which are insulated from one another, gripped between annular end plates (11) and cut out on the internal side to form wide teeth (3) which are regularly spaced in the peripheral direction and separated by notches (2), a first polyphased inductive winding (7) whose coils (7A1, 7A2, 7B1, 7B2, 7C1, 7C2) are disposed in the notches (2) to create the rotating flux (17), a second magnetic circuit for closing the sliding flux (18, 19), constituted by bars (4) which are parallel to the axis and laminated in substantially diametral planes, and a second polyphased inductive winding (8) constituted by axially spaced circular coils coaxial to the first magnetic circuit (1), where the phases follow one another axially in order to create the sliding flux, characterised in that certain consecutive teeth (3) of the first magnetic circuit are partially cut away to create axial grooves (14), in that the bars (4) of the second magnetic circuit are embedded in the said grooves (14) and separated from the first magnetic circuit by insulators (6) and in that the coils (8) creating the sliding flux (18, 19) are cylindrical and disposed inside the cylindrical volume (13) limited by the teeth (3) of the first magnetic circuit (1).

2. Electromagnetic inductor according to claim 1, characterised in that the bars (4) of the second magnetic circuit are mechanically locked by notches (16) provided in the end plates (11).

3. Electromagnetic inductor according to claim 1 or 2, characterised in that each of the cylindrical coils (8) creating the sliding flux is constituted by a layer of flat wire coiled at the side so as to form a helical winding.

4. Electromagnetic inductor according to any one of claims 1 to 3, characterised in that all the teeth (3) of the first magnetic circuit (1) are provided with grooves (14) occupied by the bars (4) of the second magnetic circuit.

5. Electromagnetic inductor according to any one of claims 1 to 4, characterised in that the first polyphased inductive winding (7) is constituted in a known manner by an even number of polar coils (7A1, 7A2, 7B1, 7B2, 7C1, 7C2) each surrounding a respective tooth (3) of the first magnetic circuit (1) and in that the polar coils mounted on two diametrically opposite teeth (3) of the first magnetic circuit (1) are electrically coupled in a known manner such that the fluxes which they create are added together.

FIG.1

FIG.2

0014636

FIG. 3

FIG. 4

FIG. 5

FIG . 6